# EUROPEAN PATENT APPLICATION

(11) **EP 4 224 225 A1**
(43) Date of publication of application: **09.08.2023**
(21) Application number: 22155388.6
(22) Date of filing: 07.02.2022
(51) Int. Cl.: G02B 6/08, B60K 37/02

(54) **METHOD FOR FORMING A 3D DISPLAY STACK**

(71) Applicant: Bayerische Motoren Werke Aktiengesellschaft, 80809 München (DE)
(72) Inventor: Iliffe-Moon, Etienne, Menlo Park, 94025 (US)

(57) **Abstract**

Examples relate to a method (10) for forming a 3D display stack (20). The method (10) comprises providing (11) a flexible display layer (21), providing (12) at least one 3D faceplate (22), and attaching (13) the flexible display layer (21) to the at least one 3D faceplate (22). The method makes use of a rigid-to-flexible bonding or lamination technique which is less challenging for the elimination of trapped air between layers of the formed display stack which is beneficial for high quality displays.

## Description

### Field

Examples relate to a method for forming a 3D display stack. The formed 3D display stack comprises at least one three-dimensional display portion at the top of the 3D display stack, i.e. a 3D faceplate, e.g. a fiber optic faceplate. Further examples relate to a 3D display stack with a display layer and at least one 3D faceplate bonded to the display layer.

### Background

In modern vehicles, user interaction between a user and vehicle systems (e.g. entertainment system, driving system, information system, etc.) is becoming more important as the number of functions of vehicles constantly increases. For example, in view of autonomous driving, the user of a vehicle has much more time to spend with such systems as there might be no more need for driving the car at least in specific situations. For example, user interaction systems and output devices (e.g. displays) are becoming more important.

For providing an output of the system to the user, larger display screens may be used. For example, digital displays are increasingly replacing analogue gauges, dials and instruments. However, normal digital displays are commonly flat 2D surfaces that lack the perceived value and 3-dimensional detail of an analogue instrument, for example. Current display technology may be limited to two-dimensional (2D) flat surfaces, e.g. due to cost constraints or technological constraints. For example, some other concepts provide flexible displays that can be curved across one axis only. Such displays may be limiting with respect to design of the display surface and may further be cost intensive.

EP 3 916 442 A1 discloses an optical faceplate for a two dimensional display. The disclosure relates to an optical faceplate for use with a two dimensional display. The optical faceplate comprises a contact surface at a bottom side of the optical faceplate for contacting the two dimensional display. The optical faceplate further comprises a three dimensional (3D) display surface at a top side of the optical faceplate, and an optic light guide material provided between the contact surface and the three dimensional display surface. In result, a 3D display system may be achieved.

However, assembling different components of a 3D system may be challenging in some cases, e.g. depending on the design of the display components. It may be difficult to contact different layers and components in a manufacturing process while maintaining a high optical display quality. For example, optical coupling between a display layer and the 3D faceplate may not comply with highest quality standards in all times. In some cases, air bubbles may be enclosed between layers of such displays, causing lower display quality. Visible display defects may bother users and cause non-satisfying user experience.

### Summary

There may be a desire for high quality 3D displays and manufacturing processes of 3D displays that help to improve optical coupling between layers of a display stack, and to avoid visible artefacts or defects in the manufactured 3D displays.

This desire is addressed by the subject-matter of the independent claims. Further examples of the proposed concepts are described in the dependent claims, the following description and in combination with the figures.

Embodiments of the present disclosure are based on a method for forming a 3D display stack. The proposed method comprises providing a flexible display layer, providing at least one 3D faceplate, and attaching the flexible display layer to the at least one 3D faceplate. A 3D faceplate having a rigid or solid body may be used. For attaching or bonding the flexible display layer to the rigid 3D faceplate, an adhesive layer can be used.

Attaching the flexible display layer to the 3D faceplate may result in higher quality displays and/or easier manufacturing compared to using non-flexible displays in the manufacturing process. For example, high quality optical properties may be achieved easier when using a flexible display in the manufacturing process. One possible benefit of using the flexible display layer is allowing a lamination technique that utilizes the flexible property of the display layer, e.g. to eliminate or avoid trapped air or voids in the bonding/lamination of the 3D Faceplate (a rigid substrate) with the flexible display; i.e. rigid to flexible bond/joint.

One or more 3D faceplates may be applied (e.g. with adhesive such as optically clear adhesive (OCA), optically clear resin (OCR), liquid optically clear adhesive (LOCA), e.g. epoxy, acrylic or silicone based adhesives, etc.) to the flexible display or touchscreen, or to certain layers of a display or touchscreen during the manufacturing process. The flexible property of the display/touchscreen allows a lamination method that requires flexibility (e.g. roller lamination, screen lamination, drum transfer lamination, arc transfer lamination, roll lamination, etc.). The resulting display/touchscreen with one or more 3D faceplates may be flat or 3-dimensionally formed (e.g. curved, folded, bent, rolled, etc.). Optionally or alternatively the display/touchscreen may actively flex (e.g. curve, fold, roll, bend, etc.) during operational states, modes, functions, etc. This flexing can be across an area outside of or away from the 3D faceplate(s), for example, as e.g. the 3D faceplate cannot flex itself. This may improve the user experience of the formed 3D display stack, for example.

For example, the proposed method may further comprise attaching a cover glass (e.g. made of glass, polymer or other transparent material) to the flexible display next to the 3D faceplate, e.g. after attaching the 3D faceplate. Alternatively, the method may comprise attaching 3D faceplate next to the cover glass, i.e. attaching the 3D faceplate after attaching the cover glass.

The method may further comprise fixing at least a portion of the flexible display layer in a flat state. For example, the complete flexible display may be fixed in a flat state (e.g. by attaching a flat rigid cover layer on the flexible display layer). A benefit of using the flexible display may arise during the manufacturing process, making it easier to avoid trapping air bubbles under the 3D faceplate and so to improve optical coupling. The result may be an easier manufacturing process.

The method may further comprise fixing at least a portion of the flexible display layer in a curved or folded state. For example, flexible display layer in contact with the 3D faceplate may be fixed in a curved state, if a contact surface of the 3D faceplate facing towards the flexible display layer has a curved shape. Additionally or alternatively, a portion of the flexible display layer around the 3D faceplate may be fixed in a curved or folded state. This may enable high flexibility in the display design which can be beneficial in the context of vehicle displays, for example.

According to an aspect of the method, attaching the flexible display layer to the at least one 3D faceplate comprises using a lamination technique. Due to the use of a flexible display layer, a flexible-to-solid lamination technique may be used. According to an aspect of the method, the lamination technique is one of roller lamination, screen lamination, drum transfer lamination, arc head lamination, glass bending lamination, or roll to sheet lamination (there may be more or alternative techniques to be used for the process, e.g. some developed by specific manufacturers/suppliers). Rolling the flexible display layer of the rigid surface of the 3D faceplate may enable removing air between the contacting surfaces, thus enabling an air bubble free contact region between a contact surface of the 3D faceplate and an adhesive used in the lamination process, and an air bubble free contact region between a contact surface of the flexible display layer and said adhesive. For example, in addition or as alternative to rolling other approaches may be used to enhance the lamination or removal of voids or air; e.g. vacuum, pressure, etc.

An aspect relates to a 3D display stack comprising a flexible display layer, and at least one 3D faceplate bonded to the display layer by an adhesive layer. A boundary region between the adhesive layer and the at least one 3D faceplate, a boundary region between the adhesive layer and the display layer, and the adhesive layer itself are free of air bubbles or voids. For example, the boundary regions vertically underneath the 3D faceplate are free of air bubbles or voids. By using other concepts, there could be a bubble between the adhesive and either the display side or 3D Faceplate side (e.g. referred to as substrates), which can occur when using a film-based adhesive/OCA. By use of flexible-to-rigid lamination technique, this may be avoided. For example, an OCR/LOCA layer may trap air differently (compared to a film) so that according to other concepts, a bubble could be suspended in the LOCA or a bubble could completely displace the adhesive in a region/area between the 3D Faceplate and display (e.g. within an adhesive layer bonding the 3D faceplate to the 2D display). According to the proposed concept, such bubbles within the adhesive layer bonding the 3D faceplate to the flexible display layer may be avoided. As an example, a flexible display (OLED, MicroLED, LCD, E-paper, etc.) may allow for the physical displacement of the trapped air (and the adhesive layer) as the flexible display is applied (e.g. rolled) onto the 3D faceplate (and/or cover glass). This may also apply to film based OCA, e.g. dependent on the conformity and thickness of the OCA material.

Trapped air in the adhesive layer or at the boundary to a contacting substrate can be affected by the adhesive parameters (e.g. adhesive type, e.g. OCA, LOCA/OCR, number of parts (and how multiple parts are mixed and if they are degassed), adhesive amount, viscosity (liquid-based adhesive) (that "conformity" or softness of a film-based OCA may be seen as the equivalent of "viscosity" of a liquid based adhesive (OCR/LOCA), for example), adhesive layer thickness, conformity (film-based OCA), etc.) and/or the process conditions (e.g. the dispensing pattern of adhesive, how substrates are placed together, pressure, vacuum, etc.). Providing the proposed method may enable minimizing or preventing "air entrapment" or minimizing or preventing "voids" in the adhesive joint. Voids can be filled with air, any other material than the adhesive or empty (i.e. vacuum). A goal of the proposed method is optimizing the displacement of air or voids in the adhesive layer or boundary regions of the adhesive layer.

With respect to air entrapment, trapped air being on different scales dependent on the amount of air and how the air was introduced to the adhesive can be considered (e.g. bigger bubbles are likely trapped due to how the substrates (e.g. 3D faceplate and display layer) are brought together and if the process allowed the displacement or elimination of air) or alternatively very small bubbles or micro-bubbles that are suspended in the adhesive may come from the processing of the adhesive (e.g. how a 2-part LOCA is mixed may introduce air bubbles that should be degassed or e.g. failed to be released/removed in the degassing process). Using proposed method may improve displacement of any air bubbles independent of the used adhesive material, thus improving optical display quality.

An example relates to a 3D display stack as described above, wherein a bottom side of the at least one 3D faceplate is bonded to the display layer. Further, said bottom side is curved such that the flexible display conforms to the surface of the 3D faceplate during lamination/bonding. A curvature radius of said bottom side of the at least one 3D faceplate equals a curvature radius of the display layer in the area bonded to the 3D faceplate.

According to an example of the proposed 3D display stack, a bottom side of the at least one 3D faceplate is bonded to the display layer, wherein said bottom side is flat. In this case, the flexibility of the display layer is not used for a curved shape of the display layer, but may have been beneficial during the manufacturing process of the 3D display stack. Additionally or alternatively, at least a portion of the display layer outside the area bonded to the at least one 3D faceplate may be curved or folded.

For example, at least a portion of the display layer outside the area bonded to the at least one 3D faceplate is flexible. Thus, the provided 3D display stack may be used in a flexible way, e.g. in different environments giving the possibility of adapting itself to different forms of said environments, for example different positions of a car interior.

A 3D display stack defines a display stack with at least one three-dimensional display element on a top side of the display. It comprises at least one three-dimensional display portion at the top of the 3D display stack, i.e. the 3D faceplate.

A proposed 3D display or display stack may be used in aspect of the vehicle, e.g. as CID, MFL, remote controller, rear seat controller, etc. The proposed concept may apply to a display with or without touch sensing. The provided touch sensor may be of any type - e.g. out-cell, on-cell or in-cell. One possibility regarding the flexibility of the flexible display layer is that the display is not just 2-dimensionally flexible, but may alternatively or additionally be 3-dimensionally flexible or curvable (e.g. also fixed in a 3D curved state).

### Brief description of the Figures

Some examples of apparatuses and/or methods will be described in the following by way of example only, and with reference to the accompanying figures, in which
- Fig. 1: shows a flow diagram of a method for forming a 3D display stack;
- Fig. 2: shows an example of a 3D display stack with a curved 3D faceplate bottom side
- Fig. 3: shows a 3D faceplate with a curved bottom side; and
- Fig. 4: shows various examples of 3D display stacks with curved or folded display portions.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

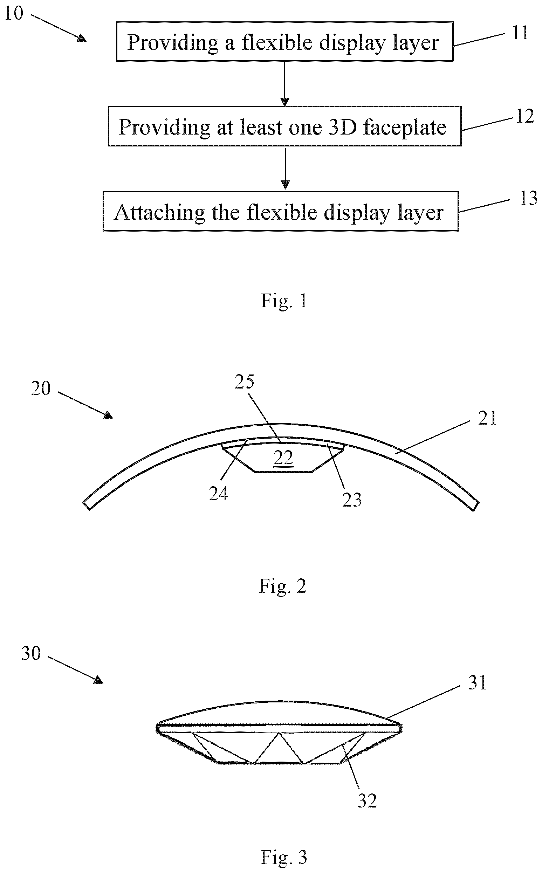

Fig. 1 shows a flow diagram of a method 10 for forming a 3D display stack. The method 10 comprises providing 11 a flexible display layer, providing 12 at least one 3D faceplate, and attaching 13 the flexible display layer to the at least one 3D faceplate. The method makes it possible to manufacture high quality displays with 3D elements with an easier manufacturing process, for example.

Typically, displays and touchscreens used in vehicles are flat. A 3D Faceplate (e.g. fiber optic faceplate) allows a flat display/touchscreen to present the pixel image on a 3-dimensional surface (i.e. on the top side of the 3D faceplate) e.g. appearing as a 3-dimensional display. There is a desire for more human centric and 3-dimensional displays. For example a curved display may wrap around a user or conform to the finger, hand or body. Conforming or wrapping around the user may provide greater visual and touch access to the display/touchscreen and so improve usability of the display/touchscreen and the GUI/UX presented on that display/touchscreen.

From a technical and manufacturing perspective, a 3D faceplate is effectively a rigid body (the material may glass or polymer based, for example). Bonding or laminating a rigid body to a rigid body (rigid-to-rigid; e.g. in case of bonding a 3D faceplate to a rigid display) is typically a more challenging task than a rigid body to a flexible body (rigid-to-flexible) or flexible body to a flexible body (flexible-to-flexible). Trapped air bubbles or pockets is a significant issue when optically bonding rigid-to-rigid bodies, and typically requires a vacuum and/or significant pressure to eliminate trapped air bubbles. Air bubbles in an optical lamination is a defect and can lead to wastage yield and increase costs.

Other displays/touchscreens (i.e. display stack lamination) behave as rigid bodies - therefore bonding a 3D Faceplate to such a display/touchscreen is a rigid-to-rigid bond and has the issue of trapped air. This can be avoided by the proposed method. Additionally, a flexible-to-rigid lamination may allow a thinner adhesive layer (e.g. thinner OCA or LOCA/OCR) which may have optical coupling benefits for the 3D faceplate. For example, typically in OCA lamination, a thicker and/or more compliant OCA layer allows for better elimination of trapped air (e.g. it allows better conformity to non-flat surfaces and/or allows for trapped air to migrate or release from the lamination; e.g. through pressure and/or vacuum)

Therefore, using a flexible display in the method for forming the 3D display stack may be beneficial. A flexible display (e.g. OLED, LCD or Micro-LED) when combined with a 3D faceplate may provide the opportunity and solution of using a rigid-to-flexible bond which may be less challenging for the elimination of trapped air. For example a rigid-to-flexible lamination can be implemented with rather simple methods such as Roller, Screen and Bending Lamination. For example, the flexible display can be applied to the rigid surface like a film. In the process, the film can be swept from side to side (e.g. using the various possible lamination processes; e.g. a roller can roll over the flexible display to press the flexible display to the adhesive, pushing potentially present air outside the bonding region and so avoiding air bubbles remaining) so that potentially existing air bubbles between the flexible display and the rigid surface can be squeezed out.

A flexible display can be defined as a display that may be curved or folded or rolled. This may be defined by the radius of curvature or bending radius that the display component is rated at (which is also lifecycle dependent). The bend radius may be driven by the display stack layer and substrate materials and thickness. For example, a glass backplane is less flexible than a polymer backplane and therefore a display with glass backplane lends itself to being a curved or lightly curved display (e.g. 500 to 1000 mm radius of curvature), whereas a display with a polymer backplane (and all other layers are flexible) lends itself to a greatly reduced radius of curvature, folded or rolled form.

One or more 3D faceplates can be applied to a common flexible display, e.g. comprising touchscreen functionality, (e.g. curvable, foldable, rollable, etc. display). Alternatively or optionally, the flexible property of the display allows the display to be bonded to the 3D Faceplate (and optionally Cover Glass or Cover Plastic) and aids elimination of trapped air and associated defects. For example, lamination techniques that require and benefit from flexibility include for example: roller lamination, screen lamination, drum transfer lamination, arc transfer lamination, roll lamination, etc. The skilled person knows necessary details of these techniques.

Alternatively or optionally, the resulting display may be used in a flat state (e.g. fixed in the flat state by attaching a flat cover glass around the 3D faceplate); i.e. the flexibility of the display may be used solely for the manufacturing process.

Alternatively or optionally, the flexible display may be fixed in a curved and/or folded and/or rolled state or a combination of. Such that the end result is a display that is not flat, but provides the benefit of wrapping around the user, or presenting the display or touchscreen surface as a 3-dimensional surface, in addition to the 3D Faceplate. Alternatively or optionally, the 3D Faceplate may be applied to a flat section of the display/touchscreen and other areas of the display/touchscreen are fixed in a 3-dimensional state. Alternatively or optionally, the 3D Faceplate may be applied to a flexible display or touchscreen such that the display/touchscreen area outside of the 3D Faceplate may actively flex, fold or roll during operation by the user or in operation inside a vehicle (e.g. according to the vehicle state, mode, function or features).

More details and aspects of the concept are mentioned in connection with the proposed concept or one or more examples described above or below (e.g. Fig. 2-4). The concept may comprise one or more additional optional features corresponding to one or more aspects of the proposed concept or one or more examples described above or below.

Fig. 2 shows an example of a 3D display stack 20 with a 3D faceplate 22 having a curved bottom side (see also Fig. 3). An adhesive layer 23 connects the 3D faceplate 22 with a curved flexible display 21. Due to the flexible property of the display 21 a rigid-to-flexible lamination technique could be used for forming the presented 3D display stack 20. The shape of the bottom side of the 3D faceplate 22 matches the curvature of the curved flexible display 21 (e.g. having the same radius).

The 3D display stack 20 has a high quality optical coupling property between the 3D faceplate 22 and the display 21. No air bubbles, voids or other enclosures are present neither between the adhesive layer 23 and the contacting area of the display 21 (boundary region 24) nor between the adhesive layer 23 and the contacting area of the 3D faceplate 22 (boundary region 25). Further, no air bubbles or voids are enclosed within the adhesive layer 23 itself.

More details and aspects of the concept are mentioned in connection with the proposed concept or one or more examples described above or below (e.g. Fig. 1 and 3-4). The concept may comprise one or more additional optional features corresponding to one or more aspects of the proposed concept or one or more examples described above or below.

Fig. 3 shows a 3D faceplate 30 with a curved bottom side 31. A top side 32 of the 3D faceplate has a facet cut. For example, optical fibers within the 3D faceplate 30 may enable to lead light from the bottom side 31 to the top side 32.

More details and aspects of the concept are mentioned in connection with the proposed concept or one or more examples described above or below (e.g. Fig. 1-2 and 4). The concept may comprise one or more additional optional features corresponding to one or more aspects of the proposed concept or one or more examples described above or below.

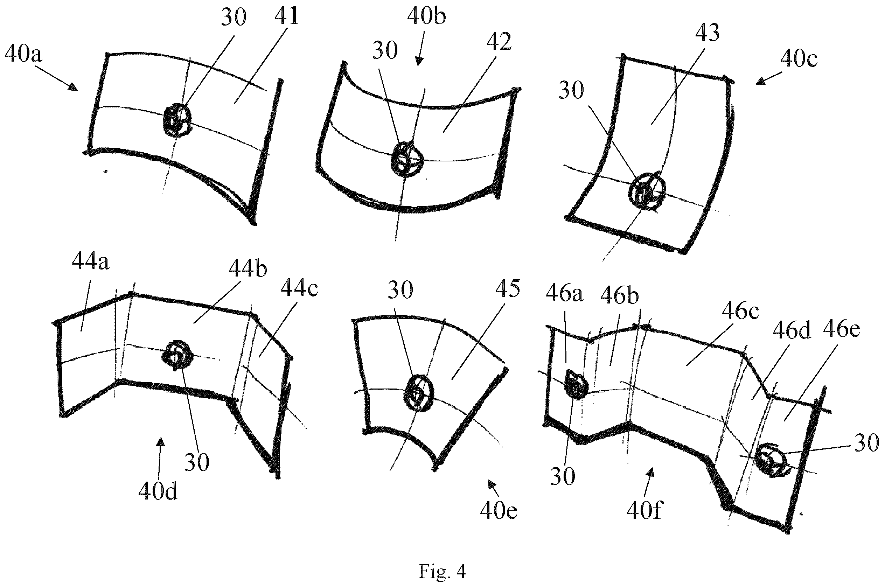

Fig. 4 shows various examples of 3D display stacks 40a - 40f with curved and folded display portions. A first 3D display stack 40a comprises a 3D faceplate 30 on a convex curved display portion 41 (e.g. completely curved). Thus, the bottom side of the faceplate 30 contacting the curved display has a concave shape. A second 3D display stack 40b comprises a 3D faceplate 30 on a concave curved display portion 42. Also a third 3D display stack 40c has a concave shaped display portion 43, wherein the 3D faceplate 30 is attached at a non-centered position of the curved display portion. A fourth 3D display stack 40d comprises three flat display portions, 44a - 44c which are arranged at angles to each other. A fifth 3D display stack 40e has a curved display portion 45 having at least two opposite sides with different side lengths. The presented curved surface may be conical in shape (cone shaped). For example, in the fifth 3D display stack, the surface curvature may not be cylindrical; e.g. the sides may or may not be angled. The display may be e.g. 3-dimensionally curvable, flexible or conformable. A sixth 3D display stack 40f has five flat display portions, 46a - 46e which are arranged at angles to each other. The display portions of the shown examples may be rigid or may enable actively flexing during use of the display stacks.

More details and aspects of the concept are mentioned in connection with the proposed concept or one or more examples described above or below (e.g. Fig. 1-3). The concept may comprise one or more additional optional features corresponding to one or more aspects of the proposed concept or one or more examples described above or below.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

## Claims

1. A method (10) for forming a 3D display stack (20), the method (10) comprising:
- providing (11) a flexible display layer (21);
- providing (12) at least one 3D faceplate (22); and
- attaching (13) the flexible display layer (21 )to the at least one 3D faceplate (22).

2. The method (10) according to claim 1, further comprising
fixing at least a portion of the flexible display layer (21) in a flat state.

3. The method (10) according to claim 1 or 2, further comprising
fixing at least a portion of the flexible display layer (21) in a curved or folded state.

4. The method (10) according to one of claims 1 to 3,
wherein attaching the flexible display layer (21) to the at least one 3D faceplate (22) comprises using a flexible-to-rigid lamination technique.

5. The method (10) according to claim 4,
wherein the lamination technique is one of roller lamination, screen lamination, drum transfer lamination, arc head lamination, glass bending lamination, or roll to sheet lamination.

6. A 3D display stack (20) comprising:
- a flexible display layer (21); and
- at least one 3D faceplate (22) bonded to the flexible display layer (21) by an adhesive layer (23),
wherein a boundary region between (25) between the adhesive layer (23) and the at least one 3D faceplate (22), a boundary region (24) between the adhesive layer (23) and the flexible display layer (21), and the adhesive layer (23) itself are free of air bubbles and voids.

7. The 3D display stack (20) according to claim 6,
wherein a bottom side of the at least one 3D faceplate (22) is bonded to the flexible display layer (21),
wherein said bottom side is curved such that the flexible display layer (21) conforms to the surface of the 3D faceplate (22) during lamination/bonding.,
wherein a curvature radius of said bottom side of the at least one 3D faceplate (22) equals a curvature radius of the flexible display layer (21) in the area bonded to the 3D faceplate (22).

8. The 3D display stack (20) according to claim 6,
wherein a bottom side (31) of the at least one 3D faceplate (22, 30) is bonded to the flexible display layer (21), wherein said bottom side is flat.

9. The 3D display stack (20) according to one of claims 6 to 8,
wherein at least a portion of the flexible display layer (21) outside the area bonded to the at least one 3D faceplate (22) is curved or folded or cone shaped.

10. The 3D display stack (20) according to one of claims 6 to 9,
wherein at least a portion of the flexible display layer (21) outside the area bonded to the at least one 3D faceplate (22) is 2-dimensionally or 3 dimensionally flexible.
